# EUROPÄISCHE PATENTSCHRIFT

(11) **EP 1 935 600 B1**
(45) Veröffentlichungstag und Bekanntmachung des Hinweises auf die Patenterteilung: **11.01.2012**
(21) Anmeldenummer: 07009879.3
(22) Anmeldetag: 18.05.2007
(51) Int. Cl.: B29C 31/00, B29C 43/32, B29C 31/08, B29C 43/34

(54) **Vorrichtung mit einer Hebevorrichtung und Verfahren zum Aufnehmen und Ablegen eines Plastifikats**
Device with hoisting device and method for picking and placing a dose of a polymer melt
Dispositif doté d'un dispositif de levage et procédé pour le ramassage et le placement d'une dose de matière plastique fondue

(30) Priorität: 20.12.2006 DE 102006060240
(43) Veröffentlichungstag der Anmeldung: 25.06.2008
(73) Patentinhaber: Schmidt & Heinzmann GmbH & Co. KG, 76646 Bruchsal (DE)
(72) Erfinder: Brüssel, Richard, 75056 Sulzfeld (DE)
(74) Vertreter: Daub, Thomas

(56) Entgegenhaltungen:
- EP-A- 0 450 482
- EP-A- 0 461 365
- EP-A- 0 588 261
- EP-A- 1 386 709
- WO-A-03/072414
- DE-U1- 20 203 818

## Beschreibung

### Stand der Technik

Die Erfindung geht aus von einer Vorrichtung mit einer Hebevorrichtung nach dem Oberbegriff des Anspruchs 1. Ferner geht die Erfindung aus von einem Verfahren zum Aufnehmen und/oder Ablegen eines Plastifikats nach dem Oberbegriff des Anspruchs 20.

Aus der Druckschrift DE 102 33 299 A1 sind eine Vorrichtung mit einer Hebevorrichtung und ein Verfahren zur Aufnahme eines auf einem Transportband aufliegenden Plastifikats, insbesondere eines klebrigen Plastifikats, zum Transport und zum Ablegen in der Pressform einer Formpresse bekannt. Hierbei wird das Plastifikat von einem oder mehreren elastischen Trageblechen aufgenommen.

Die Druckschrift EP 1 386 709 A1 offenbart eine Vorrichtung gemäß dem Oberbegriff des Anspruchs 1 und ein Verfahren gemäß dem Oberbegriff des Anspruchs 18.

Der Erfindung liegt insbesondere die Aufgabe zugrunde, eine gattungsgemäße Vorrichtung bereitzustellen, bei der ein Abhebevorgang eines Plastifikats verbessert werden kann.

### Vorteile der Erfindung

Die Erfindung geht aus von einer Vorrichtung mit einer Hebevorrichtung mit wenigstens einem Tragemittel zum Aufnehmen und/oder Ablegen eines Plastifikats, insbesondere eines klebrigen Plastifikats.

Es wird vorgeschlagen, dass eine Ausgleichslagereinheit vorgesehen ist, über die das Tragemittel gelagert ist. Dadurch können die Eigenschaften des Tragemittels einfach auf eine Tragefunktion ausgelegt werden. So kann eine Materialstärke des Tragemittels angepasst und auch ein Austauschen des Tragemittels kann einfach erreicht werden. Durch eine Anpassung der Materialstärke kann vorteilhaft eine hohe Steifigkeit des Tragemittels erreicht und ein Verbiegen des Tragemittels in einem Vorgang des Aufnehmens und Transports des Plastifikats vermieden werden. Dadurch kann sich zum einen eine gute Handhabung der Vorrichtung ergeben, und zum anderen kann eine Entstehung von Ausschuss und Verschmutzung vorteilhaft verhindert werden, da eine bei einem Herausziehen der Tragemittel entstehende Gegenbewegung der Tragemittel minimiert wird und eine dadurch hervorgerufene Beschädigung des Plastifikats ausgeschlossen wird. Das Tragemittel kann aus einem Material, wie Kunststoff, Keramik oder vorzugsweise Metall, und ist in Form eines Trageblechs ausgestaltet. Es kann aber auch aus einem weiteren, dem Fachmann als sinnvoll erscheinenden Material gebildet sein. Ferner kann vorteilhaft erreicht werden, dass eine Aufsetzkraft des Tragemittels auf eine Transporteinheit, wie einen Transportgurt, minimiert oder mittels einer Federkraft oder eines Gewichtsmoments eingestellt wird.

Des Weiteren ist das Tragemittel gelenkig gelagert, wodurch eine flexible Ausrichtung und ein Niveauausgleich des Tragemittels erreicht werden können. Diese Ausgestaltung kann konstruktiv einfach realisiert werden. Weiterhin kann vorteilhaft eine gute Führung des Tragemittels gewährleistet werden, was zu einer hohen Zuverlässigkeit der Vorrichtung führt. Ferner kann die Entstehung von Ausschuss minimiert und eine hohe Tragsicherheit besonders bei schweren und breiten Plastifikaten erreicht werden.

Ferner ist es vorteilhaft, wenn das Tragemittel an einem in eine Unterschieberichtung weisenden Ende einen sich verjüngenden Bereich aufweist. Hierbei soll insbesondere ein sich verjüngender Bereich verstanden werden, der - entlang eines Längsschnitts betrachtet - an einem Ende in einem Bereich zusammenläuft, wobei der Bereich einen senkrecht zur Längsrichtung ausgerichteten Querschnitt aufweist, der vorzugsweise max. 50 %, vorteilhafterweise max. 30 % und besonders bevorzugt max. 10 % einer Querschnittsfläche senkrecht zur Längserstreckung des Tragemittels aufweist. Der zusammenlaufende Bereich ist bevorzugt messerartig angeschrägt und weist eine scharfe Kante auf. Es sind aber auch andere, dem Fachmann als sinnvoll erscheinende Ausgestaltungen möglich. Somit können gute und materialschonende Unterschiebeeigenschaften des Tragemittels unter das Plastifikat zum Anheben desselben einfach realisiert werden.

Vorteilhafterweise ist das in Unterschieberichtung weisende Ende in einer senkrecht zur Längserstreckung betrachteten Richtung gerundet ausgeführt. Mittels dieser stumpfen Ausgestaltung des im Prozess des Unterschiebens und Anhebens beteiligten Endes des Tragemittels kann eine sorgsame Behandlung des Plastifikats erreicht und besonders vorteilhaft eine Beschädigung des Plastifikats vermieden werden.

In einer weiteren Ausgestaltung der Erfindung wird vorgesehen, zumindest einen Anschlag anzuordnen, der zumindest eine vertikale Bewegung des Tragemittels begrenzt. Durch die Anbringung eines Anschlags kann neben der flexiblen Bewegung des Tragemittels eine Eingrenzung der Bewegung auf einen bestimmten Bereich vorteilhaft erzielt werden. Die Anordnung von zwei Anschlägen, die die vertikale Bewegung vorzugsweise in zwei entgegengesetzten Richtungen, wie etwa vertikal nach oben und unten, begrenzen, kann als besonders vorteilhaft angesehen werden, da so ein Bewegungsraum besonders einfach eingeschränkt werden kann. Vorteilhaft ist hierbei ein Bewegungsraum, der einen Bewegungswinkel des Tragemittels, insbesondere bezogen auf eine Änderung einer Ausrichtung einer Längsachse des Tragemittels, zwischen zwei Anschlägen von max. 10°, besonders vorteilhaft zwischen min. 1° und max. 6°, einschließt. Eine Begrenzungsfunktion der Anschläge kann besonders einfach realisiert werden, wenn diese an einem Element der Vorrichtung angeordnet sind, an dem auch das Tragemittel angeordnet ist. Ferner kann der Begrenzungsraum zwischen den Anschlägen über ein Bedienelement in Form einer Stellschraube frei eingestellt werden, so dass auch Bewegungswinkel größer als 10° realisiert werden können. Dadurch kann ein Bewegungsfreiraum des Tragemittels gezielt auf eine oder mehrere Eigenschaften, wie etwa Größe und Gewicht des Plastifikats, eingestellt werden.

Ferner wird vorgeschlagen, dass die Vorrichtung zumindest ein Trägermittel aufweist, an dem zumindest das Tragemittel angeordnet ist. Dadurch kann vorteilhaft eine flexible Gestaltung der Anordnung des Tragemittels gewährleistet werden. Weiterhin kann das Tragemittel über eine zwischengeschaltete Verlängerung mit dem Trägermittel verbunden sein. Hierbei kann eine Wahl der verwendeten Materialien vielseitig und unterschiedlich gestaltet werden. Auch eine Anpassung an die Eigenschaften des Plastifikats kann leicht realisiert werden, da ein Austausch von Komponenten, wie beispielsweise der Verlängerung oder des Tragemittels, schnell und einfach ermöglicht wird.

Des Weiteren kann es vorteilhaft sein, wenn ein Lagermittel zur drehbaren Lagerung des Trägermittels vorgesehen ist. Ist das Lagermittel als Gelenk ausgebildet, ergibt sich ein funktioneller Vorteil. Das Trägermittel kann konstruktiv einfach verstellt, gekippt und/oder gedreht werden, wodurch eine weitere Prozessposition des Trägermittels, wie eine Reinigungs- oder eine Sicherheitsabwurfposition, erreicht werden kann. Unter einer weiteren Prozessposition soll hier insbesondere eine alternative Stellung des Trägermittels gegenüber der Position beim Unterschieben des Tragemittels unter das Plastifikat und/oder ein Transport des Plastifikats verstanden werden. Ferner ist es möglich, dass das Gelenk des Lagermittels einstückig mit dem Gelenk der Ausgleichslagereinheit ausgeführt werden kann. Dadurch kann vorteilhaft eine Einsparung von Bauteilen, Bauraum, Montageaufwand und Kosten erreicht werden, und zudem kann durch eine am Gelenk angeordnete Entriegelungseinheit auch die Position des Tragemittels leicht verändert werden. Ein Entriegelungsmechanismus der Entriegelungseinheit kann zumindest teilautomatisiert erfolgen und/oder kann mit einer Betätigungseinheit einer Sicherungseinheit gekoppelt sein.

Ist das Trägermittel um zumindest einen Winkel von 80° verstellbar, kann vorteilhaft erreicht werden, dass eine weitere Prozessposition leicht realisiert werden kann. Vorzugsweise weist eine Bewegung einen Winkel von 90° auf und resultiert in einer senkrechten Prozessposition gegenüber der Unterschiebe- und Transportposition. Dadurch können vorteilhaft das Erreichen einer Reinigungsposition durch Absenken des Trägermittels mittels eines Vertikalhubs und somit ein hoher Qualitätsstandard des Produkts gewährleistet werden. Ferner kann ein fehlerbedingter Abwurf des Plasifikats reibungslos erfolgen und dadurch kann eine hohe Sicherheit der Vorrichtung erzielt werden.

Zudem wird vorgeschlagen, dass zumindest ein Abstreifer vorgesehen ist, der zu einer Positionierung des Plastifikats nutzbar ist. Der Abstreifer ist vorteilhaft an einem weiteren Bauteil angeordnet, wobei sich das weitere Bauteil parallel zum Tragemittel, insbesondere parallel zur Unterschiebeposition des Tragemittels, erstreckt. Zudem kann der Abstreifer auf verschiedene Arten, wie Ausklappen, Ausfahren oder Drehen, insbesondere in einen Ablagebereich des Plastifikats bewegt werden. Es sind aber auch weitere, dem Fachmann als sinnvoll erscheinende Bewegungsarten denkbar. Ferner kann der Abstreifer vertikal und horizontal verstellbar befestigt sein und kann somit vorteilhaft auf verschiedene Abmessungen, wie Dicken, Breiten und/oder Längen des Plastifikats, eingestellt werden. Besonders vorteilhaft kann hierbei die Anordnung von zwei Abstreifern sein, wobei jeweils ein Abstreifer in einem Ablageprozess an eine Plastifikatseite angeordnet ist, da dadurch eine zentrale Position des Plastifikats an einer Ablagestelle, angeordnet an einer weiterverarbeitenden Einheit, leicht realisiert werden kann.

Eine bevorzugte Weiterbildung besteht darin, dass eine Betätigungseinheit vorgesehen ist, über die der Abstreifer zumindest teilautomatisiert in zyklischen Abständen bewegbar ist. Unter der Betätigungseinheit soll insbesondere eine Steuer- und/oder Regelungseinheit verstanden werden, die eine Rechen- und/oder Speichereinheit aufweist, über die ein Prozessprogramm gesteuert werden kann. Eine Informationsverbindung bzw. eine Übertragung von Signalen zwischen der Betätigungseinheit und einer Effektoreinheit des Abstreifers kann über ein Kabel und/oder kontaktlos per Funk, per Infrarot und/oder Ultraschall erfolgen, es ist aber auch eine weitere, dem Fachmann als sinnvoll erscheinende Übertragungsart denkbar. Unter der Effektoreinheit soll hier insbesondere eine Einheit verstanden werden, die auf ein Signal der Betätigungseinheit hin aktiviert wird und einen Effekt und/oder eine Reaktion einer Vorrichtung und/oder eines Bauteils bewirkt. Durch die Anordnung der Betätigungseinheit kann vorteilhaft erreicht werden, dass eine unabhängige Steuerung ermöglicht wird, mit der der Abstreifer in regelmäßigen Abständen im Prozess aktiviert werden kann.

Weist die Vorrichtung eine Warmhaltevorrichtung auf, kann vorteilhaft ein Auskühlen des Plastifikats und damit ein Verarbeitungshindernis unterbunden werden. Somit kann eine Nutzbarkeit des Plastifikats auch bei Prozessverzögerungen sichergestellt werden. Ferner ist es von Vorteil, wenn die Warmhaltevorrichtung eine Wärmequelle umfasst, wie beispielsweise ein Heizelement, das Wärme an das Plastifikat abgibt, so dass vorteilhaft eine konstante Temperatur erreicht werden kann. Dieses Heizelement kann ein elektrisches Heizelement oder bevorzugt eine Infrarotheizeinheit sein. Zu einer Kontrolle der Temperatur kann eine Sensoreinheit, wie beispielsweise ein Temperatursensor, vorgesehen sein.

Es wird zudem vorgeschlagen, dass zumindest eine Sicherungseinheit vorgesehen ist, die abhängig von wenigstens einem Parameter zumindest teilautomatisiert eine Sicherheitsmaßnahme einleitet. Die Sicherungseinheit kann von einer Betätigungseinheit gesteuert werden. Die Betätigungseinheit kann eine manuelle Betätigungseinheit, wie ein manuell betätigbarer Schalter, ein Sensor oder eine andere, dem Fachmann als sachdienlich wirkende Einheit sein. Die Signalübertragung kann analog zu der Betätigungseinheit des Abstreifers erfolgen. Somit kann einfach über die Sicherungseinheit eine Sicherheitsregelung abhängig vom Prozess und dessen Parametern, wie eine Fehlpositionierung des Plastifikats, eine Temperatur und/oder eine Zeit, erreicht werden. Besonders vorteilhaft kann es sein, wenn der Parameter, der die Sicherheitsmaßnahme vermittelt, von einem Zeitparameter gebildet ist. Dadurch ergibt sich eine einfache Prozesssteuerung, die durch eine kostengünstige Steuerung, wie beispielsweise mit einer Zeitschaltuhr, realisiert werden kann.

In einer weiteren Ausgestaltung der Erfindung wird vorgeschlagen, dass die Sicherungseinheit wenigstens eine Transportvorrichtung zur Bewegung eines Vorrichtungsmittels umfasst. Bei einem fehlerhaften Prozessablauf kann vorteilhaft erreicht werden, dass die Sicherungseinheit, indem die Transportvorrichtung aktiviert wird, in die Anordnung der Komponenten des Prozesses eingreifen kann. Hierbei soll unter dem Vorrichtungsmittel insbesondere sowohl die Warmhaltevorrichtung als auch das Trägermittel verstanden werden. Es können aber auch weitere, dem Fachmann als sinnvoll erscheinende Mittel, wie beispielsweise eine zusätzliche Abdeckung, in Betracht gezogen werden. Durch die Bewegung des Vorrichtungsmittels kann somit zum einen eine Abwendung bzw. eine Positionsverstellung der Warmhaltevorrichtung bewirkt werden, und/oder zum anderen kann ein Abwurf des Plastifikats vermittelt werden.

Eine bevorzugte Weiterbildung besteht darin, dass die Sicherungseinheit eine Löschdecke aufweist. Dadurch kann eine Überhitzung des Plastifikats bevorzugt vermieden werden. Besonderst vorteilhaft kann die Löschdecke eingezogen werden. Durch den Einzug der Löschdecke, insbesondere zwischen dem Plastifikat und einer Wärmequelle der Warmhaltevorrichtung, kann eine einfache und kostengünstige Konstruktion erzielt werden. Ein Energie verbrauchendes An- und Abschalten der Wärmequelle entfällt, ein durch Verdrehen der Warmhaltevorrichtung auftretendes Wärmefeld, das umliegende Bestandteile der Vorrichtungen und/oder einen Bediener beschädigen bzw. gefährden könnte, wird vermieden, ein Verlust des Produkts und dadurch eine hohe Ausschussproduktion können minimiert werden, und insbesondere kann ein geringer Platzverbrauch sowohl im Betrieb wie auch bei der Lagerung realisiert werden. Ferner kann weiterer Bauraum eingespart werden, da eine Führung der Löschdecke beim Falten und Entfalten oder Aufrollen und Abrollen der dünnen Löschdecke Platz sparend baut.

Des Weiteren wird vorgeschlagen, dass eine Betätigungseinheit vorgesehen ist, über die ein Einziehen der Löschdecke zumindest teilautomatisiert erfolgt. Durch eine teilautomatisierte Steuerung kann die Sicherheitsmaßnahme des Einziehens der Löschdecke einfach in den Prozessablauf integriert werden, insbesondere wenn die Betätigungseinheit als Zeitschaltuhr ausgeführt ist und die Aktivierung des Löschdeckenmechanismus von einem Zeitparameter abhängt. Dadurch kann auf einen teuren Sensor, wie einen Temperatursensor, verzichtet werden. Die Informationsverbindung bzw. die Übertragung der Signale zwischen der Betätigungseinheit und einer Effektoreinheit der Löschdecke kann über ein Kabel oder kontaktlos per Funk, per Infrarot oder Ultraschall erfolgen, es ist aber auch eine weitere, dem Fachmann als sinnvoll erscheinende Übertragungsart denkbar. Ferner kann die Betätigungseinheit besonders kostengünstig einstückig mit der Betätigungseinheit der Sicherungseinheit ausgeführt sein. Die Löschdecke kann jedoch auch bei einem Ausfall der gesamten Betriebssteuerung durch vorgespannte Energie automatisch bzw. zwangsläufig eingezogen werden. Für eine solche Situation könnten auch ein Löschgas, wie beispielsweise CO₂, oder sonstige Mittel, welche ein mögliches Entzünden verhindern, verwendet werden.

Vorteilhafterweise ist ein Reinigungsprozess zumindest eines Reinigungsmittels einer Reinigungsvorrichtung vorgesehen, wobei das Reinigungsmittel zumindest das Tragemittel säubert. Dadurch kann eine Verschmutzung von Folgeprodukten sinnvoll vermieden werden und die Lebensdauer der Vorrichtung und damit die Langzeitnutzung können vorteilhaft gewährleistet werden. Ferner können dadurch Kontaminationen bei einem Produktwechsel zu Produkten mit einer anderen Materialzusammensetzung verhindert werden. Das Reinigungsmittel kann eine Bürste, ein Hochdruckstrahl, ein Kontaktschaber und/oder ein anderes, dem Fachmann als zweckdienlich erscheinendes Reinigungsmittel darstellen. Ferner ist es denkbar, dass eine weitere Reinigungsvorrichtung vorgesehen sein kann, durch die ein anderer Bestandteil der Vorrichtung, beispielsweise das Transportband, gereinigt werden kann.

Zudem wird vorgeschlagen, dass eine Kühlzone angeordnet wird, in die zumindest das Tragemittel eintauchbar und/oder anlegbar ist. Unter der Kühlzone soll insbesondere ein Bereich verstanden werden, der unter eine Betriebstemperatur der Vorrichtung abgekühlt wird, was beispielsweise über einen Kaltluftstrom erfolgt. Dadurch kann eine Beeinträchtigung des Plastifikats durch eine Übertragung von Hitze vom Tragemittel auf das Plastifikat vermieden werden. Ferner kann durch die Kühlung des Tragemittels vorteilhaft ein Überhitzen und/oder Verschlechtern der Gleiteigenschaften des Tragemittels durch die Wärmequelle der Warmhaltevorrichtung vermieden werden. Auch Störungen und/oder Beschädigungen von Bestandteilen der Reinigungsvorrichtung durch eine zu heiße Oberfläche des Tragemittels im Reinigungsprozess können unterbunden werden. Weiterhin können optimale Bedingungen für eine nachfolgende Beschichtung geschaffen werden. Diese Beschichtung wird vorteilhafterweise von einer Beschichtungseinheit, die zumindest das Tragemittel mit zumindest einem Trennmedium beschichtet, aufgebracht. Die Beschichtung kann mittels Aufsprühen, Eintauchen, Bestreichen und/oder einem weiteren, dem Fachmann als sinnvoll erscheinenden Beschichtungsverfahren erfolgen. Das Trennmedium kann eine Trennflüssigkeit und/oder auch ein Trennpulver, wie Kreidepulver und/oder bevorzugt Talkumpulver, sein. Es sind aber auch andere, dem Fachmann als sinnvoll erscheinende Trennmedien denkbar. Durch die Beschichtung kann vorteilhaft ein einfaches und komplettes Ablösen des Plastifikats vom Tragemittel gewährleistet werden.

In einer weiteren Ausgestaltung der Erfindung wird ein Verfahren vorgeschlagen, das zum Aufnehmen und/oder Ablegen eines Plastifikats, insbesondere eines klebrigen Plastifikats, mittels eines Tragemittels dient und bei dem das Tragemittel über eine Ausgleichslagereinheit in wenigstens einem Betriebsmodus bewegt wird. Hierbei stellt der Betriebsmodus eine Prozesseinstellung dar, in der das Tragemittel in einer Prozessposition, insbesondere der Unterschiebeposition, angeordnet ist. Es ist vorteilhaft erreichbar, dass die Eigenschaften des Tragemittels einfach auf eine Tragefunktion ausgelegt werden können. Eine Materialstärke des Tragemittels kann angepasst werden, und es kann sich vorteilhaft eine hohe Steifigkeit des Tragemittels ergeben. Ein Verbiegen des Tragemittels in einem Vorgang des Aufnehmens und Transports des Plastifikats kann weitgehend vermieden werden. Es resultiert eine gute Handhabung der Vorrichtung, und eine Entstehung von Ausschuss und Verschmutzung kann vorteilhaft verhindert, und es können auch besonders breite und schwere Plastifikate gehandhabt werden.

Ist eine Betätigungseinheit vorgesehen, über die abhängig von zumindest einem Parameter eine Sicherungseinheit zumindest teilautomatisiert aktiviert wird, kann vorteilhaft erreicht werden, dass Sicherheitsmaßnahmen im Prozess eingebaut und kontrolliert werden können. Die Betätigungseinheit kann eine manuelle Betätigungseinheit, wie ein manuell betätigbarer Schalter, ein Sensor und/oder eine andere, dem Fachmann als sachdienlich wirkende Einheit, sein. Ferner kann einfach über die Betätigungseinheit eine Sicherheitsregelung abhängig vom Prozess und dessen Parametern, wie Fehlpositionierung des Plastifikats, Temperatur und/oder Zeit, erreicht werden. Vorteilhafterweise kann der Parameter, der die Sicherheitsmaßnahme vermittelt, von einem Zeitparameter gebildet und von einer Zeitschaltuhr er- und/oder vermittelt werden.

Es wird zudem vorgeschlagen, dass das Tragemittel in einem weiteren Betriebsmodus zumindest teilautomatisiert um zumindest einen Winkel von 80° gegenüber einer Unterschiebeposition verstellt wird. Hierbei soll der weitere Betriebsmodus eine Prozesseinstellung darstellen, in der das Tragemittel in einer weiteren Prozessposition zu der Unterschiebeposition angeordnet werden kann. Eine Winkelstellung von 90° gegenüber der Unterschiebeposition und eine daraus resultierende senkrechte Stellung des Tragemittels gegenüber dessen Position in der Unterschiebeposition können als vorteilhaft angesehen werden, da dadurch konstruktiv einfach eine Reinigungsposition durch Absenken des Trägermittels mittels eines Vertikalhubs und somit ein hoher Qualitätsstandard des Produkts gewährleistet werden. Ferner kann ein fehlerbedingter Abwurf des Plasifikats reibungslos erfolgen, und dadurch kann eine hohe Sicherheit der Vorrichtung erzielt werden. Das Verstellen des Tragemittels erfolgt vorteilhafterweise und konstruktiv einfach mittels eines Gelenks, das besonders bauteil-, bauraum-, montageaufwand- und kostensparend einstückig mit dem Gelenk der Ausgleichslagereinheit ausgeführt werden kann. Weiterhin kann die Betätigungseinheit mit einer Betätigungseinheit einer Sicherungseinheit gekoppelt sein.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Figur 1: eine Vorrichtung zur Durchführung eines Verfahrens in einer Seitenansicht,
- Figur 2: die Vorrichtung in einer Vorderansicht in zwei Betriebsmodi, links vor einem Aufnahmeprozess, rechts in einem Transportprozess,
- Figur 3: die Vorrichtung im Betriebsmodus eines Ablageprozesses,
- Figur 4: einen Längsschnitt durch eine Warmhaltevorrichtung aus Figur 2,
- Figur 5: einen Querschnitt V-V durch die Warmhaltevorrichtung der Figur 4 und
- Figur 6: die Vorrichtung während eines Reinigungsprozesses.

### Beschreibung des Ausführungsbeispiels

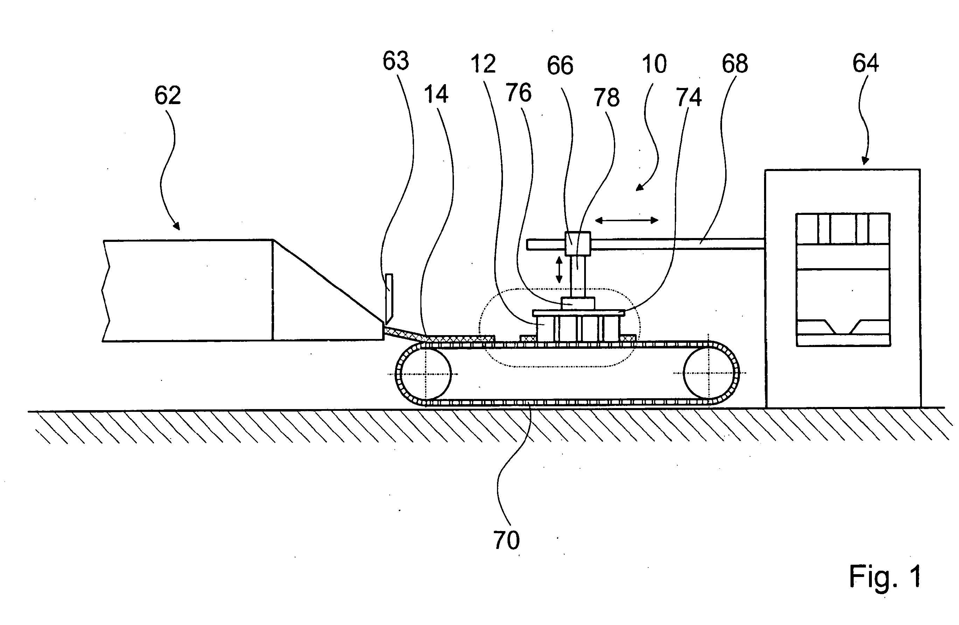

In Figur 1 ist eine Vorrichtung zu einer Durchführung des Verfahrens zu einem Aufnehmen und/oder Ablegen eines Plastifikats 14 gezeigt. Eine Vorrichtung mit einer Hebevorrichtung 10 ist zwischen einem Extruder 62 oder einer sonstigen Strangerzeugungseinheit und einer Formpresse 64 angeordnet. Die Hebevorrichtung 10 ist für einen Transport des Plastifikats 14 über einen Fahrantrieb 66 auf einer Fahrstange 68 verfahrbar ausgeführt. Das Plastifikat 14 kommt als Endlosstrang aus dem Extruder 62 und wird durch ein Schneidwerk 63 in ein Plastifikatstück getrennt auf ein Endlostransportband 70, abgelegt. Von der Ablagestelle des Transportbands wird es durch das Endlostransportband 70 in den Bereich der Hebevorrichtung 10 transportiert.

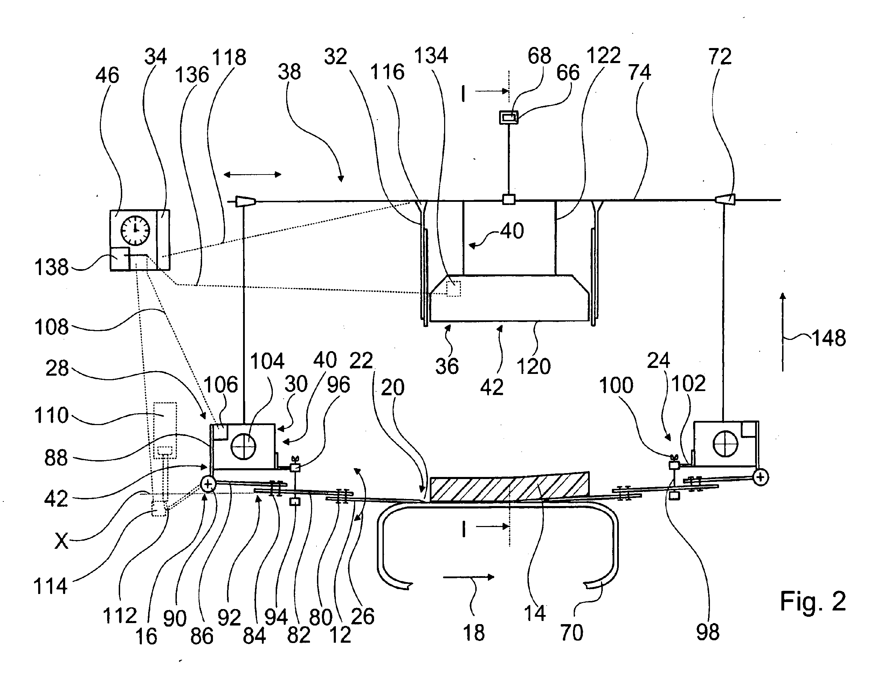

In der Hebevorrichtung 10 wird das Plastifikat 14 von einem oder mehreren über Ausgleichslagereinheiten 16 gelagerten Tragemitteln 12 im Betrieb der Hebevorrichtung 10 aufgenommen. Die Tragemittel 12 sind an zwei sich gegenüberliegenden Längsseiten des Plastifikats 14 angeordnet und sind Tragebleche aus Edelstahl. Die Aufnahme erfolgt durch ein Unterschieben eines abgerundeten Endes 20 an einem sich verjüngenden Bereich 22 der Tragemittel 12 in einer Unterschieberichtung 18 an zwei sich gegenüberliegenden Längsseiten des Plastifikats 14 (siehe Figur 2, linke Seite). Die sich gegenüberliegenden Tragemittel 12 bewegen sich in der Ebene der Haupterstreckungsfläche des Plastifikats 14 aufeinander zu.

Für das Unterschieben sind die Tragemittel 12 über Querfahrantriebe 72 an einer Querfahrstange 74 senkrecht zu einer Längsmittelachse I - I verschiebbar angeordnet. Die Querfahrstange 74 wiederum ist über einen Hubantrieb 76 an einer Hubspindel 78 für eine Bewegung in eine vertikale Auf- und Abbewegung geführt. Zwischen dem Querfahrantrieb 72 und dem Tragemittel 12 sind mehrere Elemente angeordnet. Dabei ist das Tragemittel 12 über zumindest eine kraft-, stoff- und/oder formschlüssige Verbindung, wie eine Klemmverbindung 80, an einer Verlängerung 82 aus Edelstahl befestigt. Die Verlängerung 82 wiederum ist an einem Trägermittel 28 über zumindest eine kraft-, stoff-, und/oder formschlüssige Verbindung, wie eine Klemmverbindung 84, angebracht. Das Trägermittel 28 weist einen ersten Schenkel 86 und einen zweiten Schenkel 88 auf, die nahezu senkrecht zueinander, beispielsweise L-förmig, angeordnet sind und über die Ausgleichslagereinheit 16 in der Form eines Gelenks 90 verbunden sind. An dem ersten Schenkel 86 ist die Klemmverbindung 84 angeordnet, und am zweiten Schenkel 88 befindet sich ein Lagermittel 30, das eine Verbindung zum Querfahrantrieb 72 herstellt. Der erste Schenkel 86, die Verlängerung 82 sowie das Tragemittel 12 bilden eine Trageeinheit 92. Es wäre auch möglich, dass das Tragemittel 12 und/oder die Trageeinheit 92 mit dem Trägermittel 28 einstückig ausgeführt sein können. Über die Ausgleichslagereinheit 16 bzw. das Gelenk 90 ist eine vertikale Bewegung 26, insbesondere eine vertikale Drehbewegung der Trageeinheit 92, um eine Achse des Gelenks 90 möglich, so dass die Trageeinheit 92 in eine Ebene X bewegt werden kann.

Die vertikale Bewegung 26 schließt dabei einen Winkel von min. 2° - max. 6° ein und wird von einem Anschlag 24 begrenzt. Dieser Anschlag 24 weist zwei Begrenzungsblöcke 94, 96 auf, die über eine Gewindestange 98 verbunden sind und die mittels einer Stellschraube 100 gegeneinander verstellt werden können. Der Begrenzungsblock 96 ist über eine Befestigungsstange 102 am Lagermittel 30 verstellbar befestigt. Es wäre aber auch die verstellbare Befestigung der Gewindestange 98 am Lagermittel 30 denkbar.

Das Lagermittel 30 ist als Gelenk 104 ausgebildet und ist mit einer Effektoreinheit 106 gekoppelt. Diese Effektoreinheit 106 empfängt über eine Funkverbindung 108 Signale von einer Betätigungseinheit 46. Die Betätigungseinheit 46 enthält eine Zeitschaltuhr, die nach Ablauf einer Prozesszeit automatisch und in zyklischen Abständen ein Verstellen des Trägermittels 28 mittels des Gelenks 104 bewirken kann. Alternativ kann, wie in Figur 2 gestrichelt angedeutet ist, anstelle des Gelenks 104 des Lagermittels 30 eine Entriegelungseinheit 110 über einen Kontaktbolzen 112 am Gelenk 90 angeordnet sein, über die das Gelenk 90 und die Trageeinheit 92 entriegelt werden können. Eine an der Entriegelungseinheit 110 angeordnete Effektoreinheit 114 kann über eine Funkverbindung von der Betätigungseinheit 46 automatisch gesteuert werden.

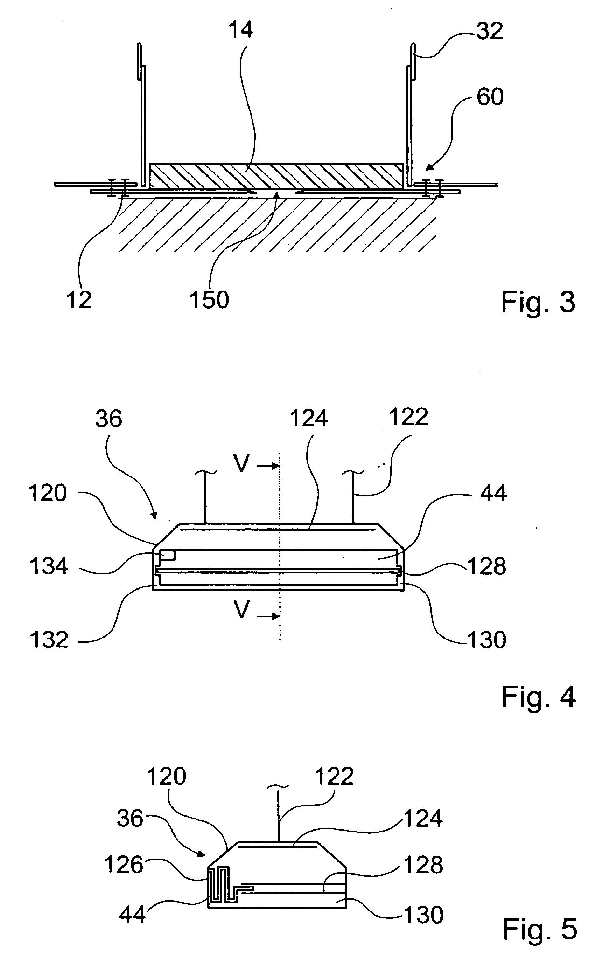

An der Querfahrstange 74 sind Abstreifer 32 angeordnet, die bei einer Ablage des Plastifikats 14 zum Beispiel in der Formpresse 64 ausgefahren werden, so dass sie an zwei Seiten des Plastifikats 14 angeordnet sind und eine exakte Positionierung des Plastifikats 14 bei einem Ablageprozess an einer Ablagestelle 150 erreichen (siehe Figur 3). Die Abstreifer 32 sind mit einer Effektoreinheit 116 gekoppelt, die mit einer Betätigungseinheit 34 eine Funkverbindung 118 zur Signalübermittlung eingeht. Die Betätigungseinheit 34 ist mit der Betätigungseinheit 46 und der Zeitschaltuhr der Betätigungseinheit 46 gekoppel, und die Abstreifer 32 können automatisiert und in zyklischen Abständen angesteuert werden.

Weiterhin ist an der Querfahrstange 74 eine Warmhaltevorrichtung 36 in der Form einer Warmhaltehaube 120 über Lagerelemente 122 montiert. Die Warmhaltehaube 120 kann mittels einer Infrarotwärmeeinheit 124 beheizt werden (siehe Figur 4). An einer Innenseite 126 einer vertikal ausgerichteten Seitenwand der Warmhaltehaube 120 ist eine Löschdecke 44 angeordnet. Die Löschdecke 44 ist so gelagert (siehe Figur 5), dass sie über Führungsstege 128 entfaltet bzw. ausgezogen werden kann, die sich über zwei senkrecht zur Innenseite 126 angeordnete weitere Innenseiten 130, 132 der Warmhaltehaube 120 erstrecken, die parallel zueinander verlaufen. Eine Effektoreinheit 134 ist an der Löschdecke 44 angeordnet und steht über eine Funkverbindung 136 mit der Betätigungseinheit 46 und damit mit der Zeitschaltuhr der Betätigungseinheit 46 in Kontakt. Die Effektoreinheit 134 löst infolge eines Signals der Betätigungseinheit 46 das Entfalten und Falten der Löschdecke 44 automatisch aus.

Eine weitere Betätigungseinheit 138 steuert eine Sicherungseinheit 38, die sich aus einer Transportvorrichtung 40 in der Form des Lagermittels 30 bzw. des Lagerelements 122 und einem durch die Transportvorrichtung 40 bewegten Vorrichtungsmittel 42 zusammensetzt. Das Vorrichtungsmittel 42 wiederum setzt sich aus dem Trägermittel 28 bzw. der Warmhaltevorrichtung 36 zusammen. Die Betätigungseinheit 138 befindet sich an der Betätigungseinheit 46 und ist mit dieser gekoppelt.

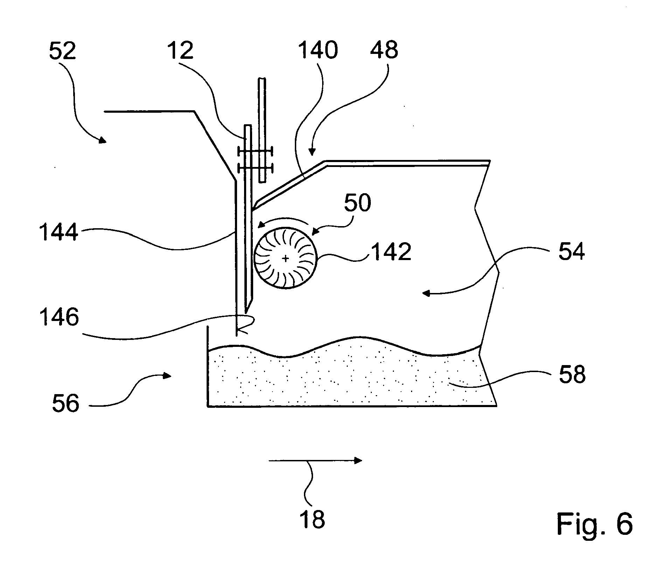

In Figur 6 ist eine Reinigungsvorrichtung 52 mit einem Reinigungsprozess gezeigt. Zur Erreichung einer Reinigungsposition wird eine Drehung des Lagermittels 30 im Gelenk 104 um 90° vollzogen, und es wird eine senkrechte Position der Trageeinheit 92 gegenüber der Unterschieberichtung 18 erreicht. In dieser Position kann das Tragemittel 12 durch den Hubantrieb 76 in vertikaler Richtung bewegt und über eine Kühlzone 54 in die Reinigungsvorrichtung 52 eingebracht werden. Das Tragemittel 12 wird durch Vorbeiführen an einem Reinigungsmittel 48 in der Form eines horizontal verschiebbaren Kontaktschabers 140 von Plastifikatresten befreit. Anschließend erfolgt eine weitere Reinigung mit einem weiteren Reinigungsmittel 50, das von einer Bürste 142 gebildet wird. Hierbei bildet ein Anlagemittel 144 eine Anlagefläche 146 für das Tragemittel 12 während des Reinigungsprozesses. Anschließend wird das Tragemittel 12 durch Eintauchen in eine Beschichtungseinheit 56 mit einem Trennmedium 58, nämlich Talkumpulver, beschichtet.

In einem Arbeitsprozess schieben sich zwei an sich gegenüberliegenden Längsseiten des Plastifikat 14 angeordnete Tragemittel 12 mit ihren abgerundeten Enden 20, die im sich verjüngenden Bereich 22 angeordnet sind, zwischen das auf dem Endlostransportband 70 liegende Plastifikat 14 und die Oberfläche des Endlostransportbands 70. Durch die vertikale Bewegung des Hubantriebs 76 werden die Tragemittel 12 mit dem Gewicht des Plastifikats 14 beaufschlagt, und sie werden entgegen einer Bewegungsrichtung 148 je nach Gewicht des Plastifikats 14 in einem Winkel von 1°- 3° über das Gelenk 90 der Ausgleichslagereinheit 16 ausgelenkt. Die Auslenkbewegung wird durch den Begrenzungsblock 94 des Anschlags 24 gestoppt, und das Tragemittel 12 wird durch den Begrenzungsblock 94 in einer Unterschiebeposition 60, die auch der Transportposition entspricht, gehalten (siehe Figur 2, rechte Seite). Während des Transportprozesses vom Endlostransportband 70 zur Formpresse 64 wird das Plastifikat 14 von der Warmhaltehaube 120 überdeckt und mittels der Infrarotwärmeeinheit 124 bei Bedarf beheizt. Eine Steuerung der Infrarotwärmeeinheit 124 erfolgt über eine nicht näher dargestellte Sensoreinheit. An der Ablagestelle 150 der Formpresse 64 halten die Tragemittel 12 mit ihrer Unterseite einen geringen Abstand und die Abstreifer 32 werden, aktiviert durch Signale der Funkverbindung 118, zwischen der Betätigungseinheit 34 und der Effektoreinheit 116 entgegen der Bewegungsrichtung 148 ausgefahren und sind an den Längsseiten des Plastifikats 14 angeordnet. Die Abstreifer 32 können auch schon während der Fahrt zur Ablagestelle 150 ausgefahren werden. Durch Aktivierung der Querfahrantriebe 72 werden die Tragemittel 12 unter dem Plastifikat 14 entgegen der Unterschieberichtung 18 herausgezogen. Die Abstreifer 32 verhindern hierbei eine Deplatzierung des Plastifikats 14 und halten es zentriert an der gewünschten Ablagestelle 150.

Tritt während des Prozessablaufs eine hier nicht näher beschriebene Steuerungsstörung, beispielsweise der Hebevorrichtung 10, oder eine Zeitüberschreitung auf, wird die Effektoreinheit 134 über die Betätigungseinheit 138 der Sicherungseinheit 38 und im Bedarf über die Zeitschaltuhr der Betätigungseinheit 46 sowie über die Funkverbindung 108 aktiviert, und es kommt durch Verstellen der Transportvorrichtung 40 bzw. des Trägermittels 28 und damit der Trageeinheit 92 um 90° zu einem Abwurf des Plastifikats 14. Wird durch einen hier nicht im Detail beschriebenen Sensor ermittelt, dass sich die Hebevorrichtung 10 in einer Abwurfposition befindet, die für einen Abwurf des Plastifikats 14 ungeeignet ist, wie beispielsweise über der Ablagestelle 150, wird die Infrarotwärmeeinheit 124 über eine hier nicht genau erläuterte Signalkette ausgeschaltet. Ferner vermittelt die durch den Sensor aktivierte Betätigungseinheit 46 über die Funkverbindung 136 und die Effektoreinheit 134, dass die Löschdecke 44 zwischen dem Plastifikat 14 und der Infrarotwärmeeinheit 124 eingezogen wird, damit ein mögliches Entzünden des Plastifikats 14 verhindert werden kann. Bei einem Ausfall der gesamten Logik bzw. Steuerung wird die Löschdecke 44 durch vorgespannte Energie automatisch bzw. zwangsläufig zwischen das Plastifikat 14 und die Infrarotwärmeeinheit 124 gezogen. Für eine solche Situation könnten auch ein Löschgas, wie beispielsweise CO₂, oder sonstige Mittel, welche ein mögliches Entzünden verhindern, verwendet werden.

Nach der Ablage des Plastifikats 14 auf der Ablagestelle 150 der Formpresse 64 oder dem Sicherheitsabwurf des Plastifikats 14 aufgrund einer Zeitüberschreitung und/oder einer Steuerungsstörung wird das Tragemittel 12 einem Reinigungsprozess unterzogen. Dafür fährt die Hebevorrichtung 10 mit Hilfe des Querfahrantriebs 72 und des Hubantriebs 76 in den Bereich einer Reinigungsvorrichtung 52. Dort wird das Tragemittel 12 gereinigt wie in der Beschreibung zu Figur 6.

Nach der Reinigung wird die Trageeinheit 92 durch das Lagermittel 30 in die Unterschiebeposition 60 gebracht, und die Aufnahme des nächsten Plastifikats kann erfolgen (siehe Figur 1, linke Seite).

### Bezugszeichen

- 10: Hebevorrichtung
- 12: Tragemittel
- 14: Plastifikat
- 16: Ausgleichslagereinheit
- 18: Unterschieberichtung
- 20: Ende
- 22: verjüngender Bereich
- 24: Anschlag
- 26: vertikale Bewegung
- 28: Trägermittel
- 30: Lagermittel
- 32: Abstreifer
- 34: Betätigungseinheit
- 36: Warmhaltevorrichtung
- 38: Sicherungseinheit
- 40: Transportvorrichtung
- 42: Vorrichtungsmittel
- 44: Löschdecke
- 46: Betätigungseinheit
- 48: Reinigungsmittel
- 50: Reinigungsmittel
- 52: Reinigungsvorrichtung
- 54: Kühlzone
- 56: Beschichtungseinheit
- 58: Trennmedium
- 60: Unterschiebeposition

- 62: Extruder
- 63: Schneidwerk
- 64: Formpresse
- 66: Fahrantrieb
- 68: Fahrstange
- 70: Endlostransportband
- 72: Querfahrantrieb
- 74: Querfahrstange
- 76: Hubantrieb
- 78: Hubspindel
- 80: Klemmverbindung
- 82: Verlängerung
- 84: Klemmverbindung
- 86: erster Schenkel
- 88: zweiter Schenkel
- 90: Gelenk
- 92: Trageeinheit
- 94: Begrenzungsblock
- 96: Begrenzungsblock
- 98: Gewindestange
- 100: Stellschraube
- 102: Befestigungsstange
- 104: Gelenk
- 106: Effektoreinheit
- 108: Funkverbindung

- 110: Entriegelungseinheit
- 112: Kontaktbolzen
- 114: Effektoreinheit
- 116: Effektoreinheit
- 118: Funkverbindung
- 120: Warmhaltehaube
- 122: Lagerelement
- 124: Infrarotwärmeeinheit
- 126: Innenseite
- 128: Führungssteg
- 130: weitere Innenseite
- 132: weitere Innenseite
- 134: Effektoreinheit
- 136: Funkverbindung
- 138: Betätigungseinheit
- 140: Kontaktschaber
- 142: Bürste
- 144: Anlagemittel
- 146: Anlagefläche
- 148: Bewegungsrichtung
- 150: Ablagestelle

## Patentansprüche

1. Vorrichtung mit einer Hebevorrichtung (10) mit wenigstens einem Tragemittel (12) zum Aufnehmen und/oder Ablegen eines Plastifikats (14) und mit einem Trägermittel (28) zur Anordnung zumindest des Tragemittels (12), das in Form eines Trageblechs ausgestaltet ist, sowie mit einem Endlostransportgurt (70) zum Transport des Plastifikats (14) von einer Ablagestelle in einen Bereich der Hebevorrichtung (10), **gekennzeichnet durch** eine Ausgleichslagereinheit (16), über die das Tragemittel (12) für eine flexible Ausrichtung und einen Niveauausgleich gelenkig gelagert an dem Trägermittel (28) angeordnet ist, um eine Aufsetzkraft des Tragemittels (12) auf dem Endlostransportgurt (70) zu minimieren.

2. Vorrichtung nach Anspruch 1, **dadurch gekennzeichnet, dass** das Tragemittel (12) an einem in eine Unterschieberichtung (18) weisenden Ende (20) einen sich verjüngenden Bereich (22) aufweist.

3. Vorrichtung zumindest nach Anspruch 2, **dadurch gekennzeichnet, dass** das in Unterschieberichtung (18) weisende Ende (20) in einer senkrecht zur Längserstreckung betrachteten Richtung gerundet ausgeführt ist.

4. Vorrichtung nach einem der Ansprüche 1 bis 3, **gekennzeichnet durch** zumindest einen Anschlag (24), der zumindest eine vertikale Bewegung (26) des Tragemittels (12) begrenzt.

5. Vorrichtung nach einem der vorhergehenden Ansprüche, **gekennzeichnet durch** ein Lagermittel (30), das zur drehbaren Lagerung des Trägermittels (28) vorgesehen ist.

6. Vorrichtung nach einem der vorhergehenden Ansprüche, **dadurch gekennzeichnet, dass** das Trägermittel (28) um zumindest einen Winkel von 80° verstellbar ist.

7. Vorrichtung nach einem der vorhergehenden Ansprüche, **gekennzeichnet durch** zumindest einen Abstreifer (32), der zu einer Positionierung des Plastifikats (14) nutzbar ist.

8. Vorrichtung nach einem der Ansprüche 6 oder 7, **gekennzeichnet durch** eine Betätigungseinheit (34), über die der Abstreifer (32) zumindest teilautomatisiert in zyklischen Abständen bewegbar ist.

9. Vorrichtung nach einem der vorhergehenden Ansprüche, **gekennzeichnet durch** eine Warmhaltevorrichtung (36).

10. Vorrichtung nach einem der vorhergehenden Ansprüche, **gekennzeichnet durch** zumindest eine Sicherungseinheit (38), die dazu vorgesehen ist, abhängig von wenigstens einem Parameter zumindest teilautomatisiert eine Sicherheitsmaßnahme einzuleiten.

11. Vorrichtung nach Anspruch 10, **dadurch gekennzeichnet, dass** der Parameter von einem Zeitparameter gebildet ist.

12. Vorrichtung nach Anspruch 10, **dadurch gekennzeichnet, dass** die Sicherungseinheit (38) wenigstens eine Transportvorrichtung (40) zur Bewegung eines Vorrichtungsmittels (42) umfasst.

13. Vorrichtung nach einem der Ansprüche 10 oder 12, **dadurch gekennzeichnet, dass** die Sicherungseinheit (38) eine Löschdecke (44) aufweist.

14. Vorrichtung nach einem der Ansprüche 10 bis 13, **gekennzeichnet durch** eine Betätigungseinheit (46), über die ein Einziehen der Löschdecke (44) zumindest teilautomatisiert erfolgt.

15. Vorrichtung nach einem der vorhergehenden Ansprüche, **gekennzeichnet durch** einen Reinigungsprozess zumindest eines Reinigungsmittels (48, 50) einer Reinigungsvorrichtung (52), wobei das Reinigungsmittel (48, 50) zumindest das Tragemittel (12) säubert.

16. Vorrichtung nach einem der vorhergehenden Ansprüche, **gekennzeichnet durch** eine Kühlzone (54), in die zumindest das Tragemittel (12) eintauchbar und/oder anlegbar ist.

17. Vorrichtung nach einem der vorhergehenden Ansprüche, **gekennzeichnet durch** eine Beschichtungseinheit (56), die zumindest das Tragemittel (12) mit zumindest einem Trennmedium (58) beschichtet.

18. Verfahren zum Aufnehmen und/oder Ablegen eines Plastifikats (14) mittels eines Tragemittels (12), das an einem Trägermittel (28) angeordnet ist und das in Form eines Trageblechs ausgestaltet ist, wobei das Plastifikat (14) von einem Endlostransportgurt (70) von einer Ablagestelle in einen Bereich einer Hebevorrichtung transportiert wird, **dadurch gekennzeichnet, dass** das Tragemittel (12) über eine Ausgleichslagereinheit (16) in wenigstens einem Betriebsmodus für eine flexible Ausrichtung und einen Niveauausgleich gelenkig gelagert bewegt wird, um eine Aufsetzkraft des Tragemittels (12) auf dem Endlostransportgurt (70) zu minimieren.

19. Verfahren nach einem der vorhergehenden Ansprüche, **gekennzeichnet durch** eine Betätigungseinheit (46), über die abhängig von zumindest einem Parameter eine Sicherungseinheit (38) zumindest teilautomatisiert aktiviert wird.

20. Verfahren nach einem der vorhergehenden Ansprüche, **dadurch gekennzeichnet, dass** das Tragemittel (12) in einem weiteren Betriebsmodus zumindest teilautomatisiert um zumindest einen Winkel von 80° gegenüber einer Unterschiebeposition (60) verstellt wird.

## Claims

1. Apparatus having a lifting apparatus (10) having at least one carrying means (12) for receiving and/or delivering a polymer melt (14), and having a carrier means (28) for arranging at least the carrying means (12) which is configured in the form of a carrying sheet, and having an endless conveyor belt (70) for transporting the polymer melt (14) from a delivery point into a region of the lifting apparatus (10), **characterized by** a compensation bearing unit (16), via which the carrying means (12) is arranged on the carrier means (28) in an articulately mounted manner for flexible orientation and level compensation, in order to minimize a depositing force of the carrying means (12) on the endless conveyor belt (70).

2. Apparatus according to Claim 1, **characterized in that** the carrying means (12) has a tapering region (22) at one end (20) which points in a pushing-under direction (18).

3. Apparatus at least according to Claim 2, **characterized in that** the end (20) which points in the pushing-under direction (18) is of rounded configuration in a direction as viewed perpendicularly with respect to the longitudinal extent.

4. Apparatus according to one of Claims 1 to 3, **characterized by** at least one stop (24) which delimits at least one vertical movement (26) of the carrying means (12).

5. Apparatus according to one of the preceding claims, **characterized by** a bearing means (30) which is provided for rotatable mounting of the carrier means (28).

6. Apparatus according to one of the preceding claims, **characterized in that** the carrier means (28) can be adjusted about at least an angle of 80°.

7. Apparatus according to one of the preceding claims, **characterized by** at least one stripper (32) which can be used for positioning of the polymer melt (14).

8. Apparatus according to either of Claims 6 and 7, **characterized by** an actuating unit (34), via which the stripper (32) can be moved at cyclical intervals in an at least partially automated manner.

9. Apparatus according to one of the preceding claims, **characterized by** a heat-retaining apparatus (36).

10. Apparatus according to one of the preceding claims, **characterized by** at least one safety unit (38) which is provided for initiating a safety measure as a function of at least one parameter in an at least partially automated manner.

11. Apparatus according to Claim 10, **characterized in that** the parameter is formed by a time parameter.

12. Apparatus according to Claim 10, **characterized in that** the safety unit (38) comprises at least one transport apparatus (40) for moving an apparatus means (42).

13. Apparatus according to either of Claims 10 and 12, **characterized in that** the safety unit (38) has a fire blanket (44).

14. Apparatus according to one of Claims 10 to 13, **characterized by** an actuating unit (46), via which the fire blanket (44) is pulled in in an at least partially automated manner.

15. Apparatus according to one of the preceding claims, **characterized by** a cleaning process of at least one cleaning means (48, 50) of a cleaning apparatus (52), the cleaning means (48, 50) cleaning at least the carrying means (12).

16. Apparatus according to one of the preceding claims, **characterized by** a cooling zone (54), into which at least the carrying means (12) can be dipped and/or placed.

17. Apparatus according to one of the preceding claims, **characterized by** a coating unit (56) which coats at least the carrying means (12) with at least one release agent (58).

18. Method for receiving and/or delivering a polymer melt (14) by means of a carrying sheet (12), which is arranged at a carrier means (28) and which is configured in the form of a carrying sheet, the polymer melt (14) being transported by an endless conveyor belt (70) from a delivery point into a region of a lifting apparatus, **characterized in that** the carrying means (12) is moved in an articulately mounted manner for flexible orientation and level compensation in at least one operating mode via a compensation bearing unit (16) in order to minimize a depositing force of the carrying means (12) on the endless conveyor belt (70).

19. Method according to one of the preceding claims, **characterized by** an actuating unit (46), via which a safety unit (38) is activated as a function of at least one parameter in an at least partially automated manner.

20. Method according to one of the preceding claims, **characterized in that**, in a further operating mode, the carrying means (12) is adjusted in an at least partially automated manner by at least an angle of 80° with respect to a pushing-under position (60).

## Revendications

1. Dispositif comprenant un dispositif de levage (10) avec au moins un moyen porteur (12) pour recevoir et/ou déposer une dose de matière plastique (14) et avec un moyen de support (28) pour l'agencement d'au moins le moyen porteur (12) qui est configuré sous la forme d'une tôle porteuse, et comprenant un convoyeur à courroie sans fin (70) pour le transport de la dose de matière plastique (14) depuis un point de dépôt dans une région du dispositif de levage (10), **caractérisé par** une unité de palier d'équilibrage (16), par le biais de laquelle le moyen porteur (12) est disposé et supporté sur le moyen de support (28) de manière articulée en vue d'une orientation flexible et d'un équilibrage du niveau, afin de minimiser une force d'application du moyen porteur (12) sur le convoyeur à courroie sans fin (70).

2. Dispositif selon la revendication 1, **caractérisé en ce que** le moyen porteur (12) présente, sur une extrémité (20) tournée dans une direction de glissement par le dessous (18), une région (22) se rétrécissant.

3. Dispositif selon au moins la revendication 2, **caractérisé en ce que** l'extrémité (20) tournée dans la direction de glissement par le dessous (18) est réalisée sous forme arrondie dans une direction considérée perpendiculairement à l'étendue longitudinale.

4. Dispositif selon l'une quelconque des revendications 1 à 3, **caractérisé par** au moins une butée (24) qui limite au moins un mouvement vertical (26) du moyen porteur (12).

5. Dispositif selon l'une quelconque des revendications précédentes, **caractérisé par** un moyen de palier (30) qui est prévu pour le support sur palier rotatif du moyen de support (28).

6. Dispositif selon l'une quelconque des revendications précédentes, **caractérisé en ce que** le moyen de support (28) peut être déplacé d'au moins un angle de 80°.

7. Dispositif selon l'une quelconque des revendications précédentes, **caractérisé par** au moins un organe de raclage (32), qui peut être utilisé pour positionner la dose de matière plastique (14).

8. Dispositif selon l'une quelconque des revendications 6 ou 7, **caractérisé par** une unité d'actionnement (34), par le biais de laquelle l'organe de raclage (32) peut être déplacé au moins de manière partiellement automatisée dans des intervalles cycliques.

9. Dispositif selon l'une quelconque des revendications précédentes, **caractérisé par** un dispositif de maintien au chaud (36).

10. Dispositif selon l'une quelconque des revendications précédentes, **caractérisé par** au moins une unité de sécurité (38) qui est prévue pour amorcer une mesure de sécurité en fonction d'au moins un paramètre, et ce de manière au moins partiellement automatisée.

11. Dispositif selon la revendication 10, **caractérisé en ce que** le paramètre est un paramètre temporel.

12. Dispositif selon la revendication 10, **caractérisé en ce que** l'unité de sécurité (38) comprend au moins un dispositif de transport (40) pour déplacer un moyen de dispositif (42).

13. Dispositif selon l'une quelconque des revendications 10 ou 12, **caractérisé en ce que** l'unité de sécurité (38) présente une couverture antifeu (44).

14. Dispositif selon l'une quelconque des revendications 10 à 13, **caractérisé par** une unité d'actionnement (46), par le biais de laquelle la couverture antifeu (44) est rétractée de manière au moins partiellement automatisée.

15. Dispositif selon l'une quelconque des revendications précédentes, **caractérisé par** un processus de nettoyage d'au moins un moyen de nettoyage (48, 50) d'un dispositif de nettoyage (52), le moyen de nettoyage (48, 50) nettoyant au moins le moyen porteur (12).

16. Dispositif selon l'une quelconque des revendications précédentes, **caractérisé par** une zone de refroidissement (54), dans laquelle le moyen porteur (12) peut être plongé et/ou posé.

17. Dispositif selon l'une quelconque des revendications précédentes, **caractérisé par** une unité de revêtement (56) qui revêt au moins le moyen porteur (12) d'au moins un milieu séparateur (58).

18. Procédé pour recevoir et/ou déposer une dose de matière plastique (14) au moyen d'un moyen porteur (12) qui est disposé sur un moyen de support (28) et qui est configuré sous la forme d'une tôle porteuse, la dose de matière plastique (14) étant transportée par un convoyeur à courroie sans fin (70) depuis un point de dépôt dans une région d'un dispositif de levage, **caractérisé en ce que** le moyen porteur (12) est déplacé et supporté de manière articulée par le biais d'une unité de palier d'équilibrage (16) dans au moins un mode de fonctionnement en vue d'une orientation flexible et d'un équilibrage du niveau, afin de minimiser une force d'application du moyen porteur (12) sur le convoyeur à courroie sans fin (70).

19. Procédé selon l'une quelconque des revendications précédentes, **caractérisé par** une unité d'actionnement (46) par le biais de laquelle une unité de sécurité (38) est actionnée de manière au moins partiellement automatisée en fonction d'au moins un paramètre.

20. Procédé selon l'une quelconque des revendications précédentes, **caractérisé en ce que** le moyen porteur (12), dans un autre mode de fonctionnement, est déplacé de manière au moins partiellement automatisée d'au moins un angle de 80° par rapport à une position de glissement par le dessous (60).
